(19) Europäisches Patentamt
European Patent Office
Office européen des brevets

(11) **EP 4 095 743 A1**

(12) **EUROPEAN PATENT APPLICATION**

(43) Date of publication:
**30.11.2022 Bulletin 2022/48**

(21) Application number: **21176128.3**

(22) Date of filing: **27.05.2021**

(51) International Patent Classification (IPC):
**G06K 9/00** (2022.01)     **G06K 9/62** (2022.01)
**G06T 7/00** (2017.01)

(52) Cooperative Patent Classification (CPC):
**G06K 9/6273; G06V 20/56**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Valeo Comfort and Driving Assistance
94000 Créteil (FR)**

(72) Inventors:
• **LE MOING, Guillaume
94000 Creteil (FR)**

• **VU, Tuan Hung
94000 Creteil (FR)**
• **HIMALAYA, Jain
94000 Creteil (FR)**
• **PEREZ, Patrick
94000 Creteil (FR)**
• **CORD, Matthieu
94000 Creteil (FR)**

(74) Representative: **Jauregui Urbahn, Kristian
Valeo Schalter und Sensoren GmbH
CDA-IP
Laiernstraße 12
74321 Bietigheim-Bissingen (DE)**

(54) **METHOD FOR GENERATING AN AUGMENTED DATA SET**

(57)     A method for artificially generating semantically segmented layouts includes: defining a semantic code (204) comprising a vector of values, each corresponding to a respective proportion of a class in the semantically segmented layout; combining a noise vector (202) and the semantic code (204) into a feature map ($\Pi n$) with a first resolution; applying a softmax regression to produce normalized map (p); multiplying the values of each location of the normalized map (p) within a channel by a corresponding value for a class for the semantic code to produce a weighted feature map ($\omega$); normalizing channel values at each location of the weighted feature map ($\omega$) so that the value at each location in a channel represents a proportion of the total probability of channel values at the location to produce a candidate segmented layout (m); fusing and upscaling the candidate segmented layout (m) with the feature map ($\Pi n$) to provide a higher resolution feature map ($\Pi n+1$); and repeating the process to produce a higher resolution candidate segmented layout (m).

Figure 1

## Description

## Field

The present invention relates to a method for generating an augmented data set comprising artificially generated semantically segmented layouts and corresponding images.

## Background

Arjovsky, Martin, Soumith Chintala, and Leon Bottou, "Wasserstein GAN", in ICML 2017; Goodfellow, Ian, Jean Pouget-Abadie, Mehdi Mirza, Bing Xu, David Warde-Farley, Sherjil Ozair, Aaron Courville, and Yoshua Bengio, "Generative Adversarial Nets", in NeurIPS 2014; and Mao, Xudong, Qing Li, Haoran Xie, Raymond YK Lau, Zhen Wang, and Stephen Paul Smolley, "Least Squares Generative Adversarial Networks", in ICCV 2017 disclose the use of Generative Adversarial Networks (GANs) to generate photo-realistic images based on a collection of examples.

Karras, Tero, Samuli Laine, and Timo Aila, "A Style-Based Generator Architecture for Generative Adversarial Networks", in CVPR 2019; and Karras, Tero, Samuli Laine, Miika Aittala, Janne Hellsten, Jaakko Lehtinen, and Timo Aila, "Analyzing and Improving the Image Quality of styleGAN," in CVPR 2020 disclose that when trained on real photo portraits in particular, GANs can produce stunning results.

In automotive applications, generating a wide range of synthetic driving scenes to replace or complement limited amounts of real annotated data is expected to help training better models in the future, for critical-safety tasks such as object detection and segmentation.

One form of image annotation comprises a semantic layout for an image in which each pixel or group of pixels of an image is associated with one of a fixed number of semantic classes, for example, road, car, person.

For complex structured images like urban scenes, GANs still struggle to produce satisfactory results: not only do generated scenes exhibit various types of artifacts, but they are also difficult to use for downstream tasks.

Previous work breaks down scene generation into two consecutive phases: semantic layout synthesis and image synthesis conditioned on semantic layouts.

For example, Azadi, Samaneh, Michael Tschannen, Eric Tzeng, Sylvain Gelly, Trevor Darrell, and Mario Lucic, "Semantic Bottleneck Scene Generation", arXiv Preprint 2019 discloses SB-GAN a pipeline which combines a model based on ProGAN disclosed in Karras, Tero, Timo Aila, Samuli Laine, and Jaakko Lehtinen, "Progressive Growing of GANs for Improved Quality, Stability, and Variation", in ICLR 2018 for generating semantic layouts and GauGAN disclosed in Park, Taesung, Ming-Yu Liu, Ting-Chun Wang, and Jun-Yan Zhu, "Semantic Image Synthesis with Spatially-Adaptive Normalization", in CVPR, 2019 for transforming these layouts into photo-realistic images.

Howe, Jonathan, Kyle Pula, and Aaron A Reite, "Conditional Generative Adversarial Networks for Data Augmentation and Adaptation in Remotely Sensed Imagery", in Applications of Machine Learning, 2019, discloses PGAN-CGAN which is similar but uses Pix2PixHD disclosed in Wang, Ting-Chun, Ming-Yu Liu, Jun-Yan Zhu, Andrew Tao, Jan Kautz, and Bryan Catanzaro, "High-Resolution Image Synthesis and Semantic Manipulation with Conditional GANs", in CVPR 2018 instead as the image generator.

Volokitin, Anna, Ender Konukoglu, and Luc Van Gool, "Decomposing Image Generation into Layout Prediction and Conditional Synthesis", in CVPRw 2020 uses DCGAN disclosed in Radford, Alec, Luke Metz, and Soumith Chintala, "Unsupervised Representation Learning with Deep Convolutional Generative Adversarial Networks", in ICLR 2016 as the layout generator and Pix2Pix disclosed in Isola, Phillip, Jun-Yan Zhu, Tinghui Zhou, and Alexei A Efros, "Image-to-Image Translation with Conditional Adversarial Networks," in CVPR 2017 as the image generator.

Recently, EdgeGAN disclosed in Tang, Hao, Xiaojuan Qi, Dan Xu, Philip HS Torr, and Nicu Sebe, "Edge Guided GANs with Semantic Preserving for Semantic Image Synthesis", arXiv Preprint, 2020 proposed to generate structure and texture in parallel and blend the two together using an edge transfer module.

Conditional GANs (cGANs), such as disclosed in Mirza, Mehdi, and Simon Osindero, "Conditional Generative Adversarial Nets", arXiv Preprint 2014 are designed to guide image generation with conditioning input features, that is, target attributes of the generated data. Gradually deviating from the traditional GAN framework, alternative learning setups such as disclosed in Odena, Augustus, Christopher Olah, and Jonathon Shlens, "Conditional Image Synthesis with Auxiliary Classifier GANs", in ICML 2017 and methods to better fuse the conditioning features with the generation pipeline have been proposed. An emerging trend is to infer some generator's parameters from the conditioning input, e.g., normalization parameters as disclosed in De Vries, Harm, Florian Strub, Jérémie Mary, Hugo Larochelle, Olivier Pietquin, and Aaron C Courville, "Modulating Early Visual Processing by Language", in NeurIPS 2017; and Dumoulin, Vincent, Jonathon Shlens, and Manjunath Kudlur, "A Learned Representation for Artistic Style", in ICLR 2017, or convolutional kernels as disclosed in Liu, Xihui, Guojun Yin, Jing Shao, Xiaogang Wang, and Hongsheng Li, "Learning to Predict Layout-to-Image Conditional Convolutions for Semantic Image Synthesis", in NeurIPS 2019, either uniformly or on class-specific regions, to better take into account the scene structure.

In relation to image generation conditioned on semantic layout, while Pix2Pix, referred to above provides a general-purpose image-to-image translation network which was among the first to produce compelling results for this conditional generation task, later works have produced more realistic images at higher resolution by using a multi-scale generator, adding a feature-matching loss within the discriminator, or using instance boundary map information.

## Summary

According to the present invention there is provided a method for generating an augmented data set according to claim 1.

The present application generally follows the approach of the prior art assessed above in dividing the synthesis of semantic layout-image pairs into two consecutive phases: first generating semantic layouts with plausible object arrangements and then translating these layouts into realistic images.

The present application is concerned with improving the first semantic layout generation phase.

In embodiments, the generation of semantic layouts is controlled with (or accommodates) a class histogram defining a target distribution of semantic classes for a scene. The class histogram comprising a vector of class proportions provides a semantic palette which determines the semantic proportions of generated images, so that semantic layouts generated match the composition of the palette. This class histogram can be manually defined, automatically derived from a true one, or sampled from a suitable distribution, depending on the application.

The class histogram as well as standard random noise is provided to a conditional layout GAN comprising a pipeline of stages which are progressively trained to generate sematic layouts at increasingly refined scales. The class histogram is also provided at each stage of the progressively trained pipeline.

Each stage of the pipeline includes a semantically-assisted activation (SAA) module with 2 learning objectives and a residual conditional fusion module to enable the propagation of the semantic layout through the stages of the pipeline.

Using semantically assisted activation and residual conditional fusion coupled with conditional losses, embodiments generate plausible scene layouts with class proportions close to the target distribution and which translate into realistic images.

Some embodiments allow for partial editing of sub-regions in semantic layouts of pre-existing images which may be real images or not.

The disclosed approaches improve both the quality of the semantic layout-image pairs that are subsequently generated and the practical use of these layout-image pairs so improving the training of semantic segmentation networks.

Embodiments allow for end-to-end training of both layout and image generators.

## Brief Description of the Drawings

Various embodiments of the present invention will now be described, by way of example, in which:

Figure 1 illustrates an exemplary network for conditional synthesis of semantic layouts according to an embodiment of the present invention;

Figure 2 illustrates scene generation guided by semantic proportions according to an embodiment of the present invention;

Figure 3 illustrates in more detail the TO-MASK component of the network of Figure 1 providing semantically-assisted activation; and

Figure 4 illustrates partial layout editing according to an embodiment of the present invention.

## Description of the Embodiments

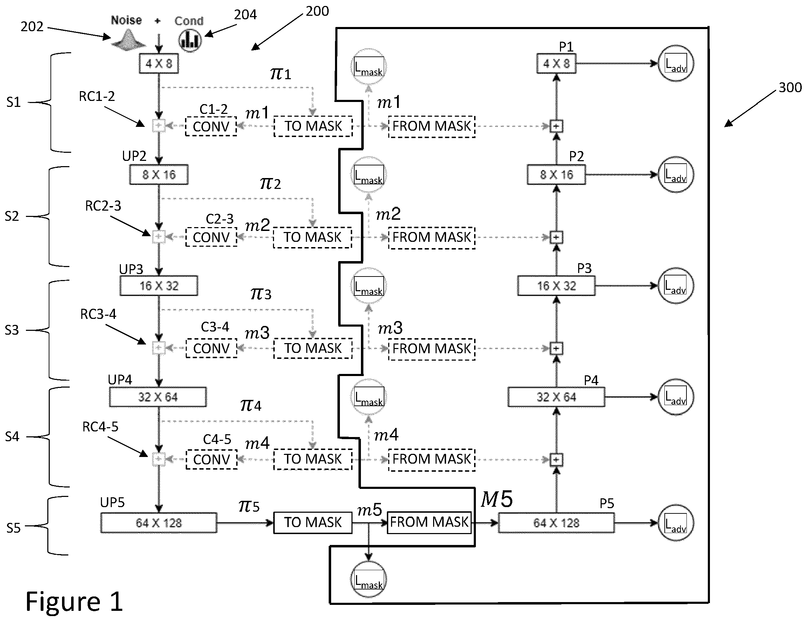

Referring now to Figure 1, embodiments of the present invention use a generative network 200 to produce new semantic layouts while controlling their semantic composition. The network 200 comprises a cascade of convolutional sub-network stages S1 ... S5, each handling information at a respective scale 4x8, 8x16...64x128 and trained in a progressive way. Figure 1 shows a snapshot during training of stage S5 of the generative network 200, producing a semantic layout *M5* at a scale of 64 x 128.

For the first stage S1, an input noise vector 202 comprising $Z$ samples from a standard Gaussian distribution is concatenated with a target normalized class histogram $t$ (204) comprising $C$ semantic classes, with $\sum_{c=1}^{C} t_c = 1$, within the block 4x8 to produce a feature map Π1 with dimensions Fx4x8. The number of channels F of the feature map Π1 depends on the number of samples in the noise vector 202 and the number of classes in the conditioning code 204 and the output resolution $H \times W$ of the feature map Π1.

In the embodiment, the feature map Π1 is produced from a concatenation of a vector of values for C=35 classes and 512 noise samples, typically through a series of one or more convolution layers (not shown) in the 4x8 block, with the feature map Π1 comprising F=512 channels.

In any case, the feature map Π1 is provided as input provided to a first stage [TO MASK] block.

At each following stage S2..S5, a respective block UP2...UP5, in the example, comprising two $3 \times 3$ convolutional layers with ReLU activation functions upscales input information by 2 and produces a feature map Π of size $H \times W$ which is provided as input Π for a [TO MASK] block.

Each [TO MASK] block turns its input feature map Π into a candidate semantic layout m (a set of masks or maps) for the stage.

The largest-scale or highest resolution candidate semantic layout *m* output by a [TO MASK] block for a stage is transformed through a corresponding [FROM MASK] block, as explained in more detail below, to produce a final semantic layout *M.*

During training, a discriminator network 300 obtains the final semantic layout *M* from the stage being trained, having been transformed through a corresponding [FROM MASK] block, and compares this against a semantic layout for a ground truth image whose semantic code 204 was supplied as input to the generative network 200 for adversarial training. The final semantic layout *M* can either be downsampled to a lower resolution, through one or more of pooling or downsampling blocks P5... P1 or alternatively, the discriminator 300 can operate at the resolution of the highest resolution semantic layout provided, with the input semantic layout for the ground truth image being upscaled accordingly before being compared with the final semantic layout *M.*

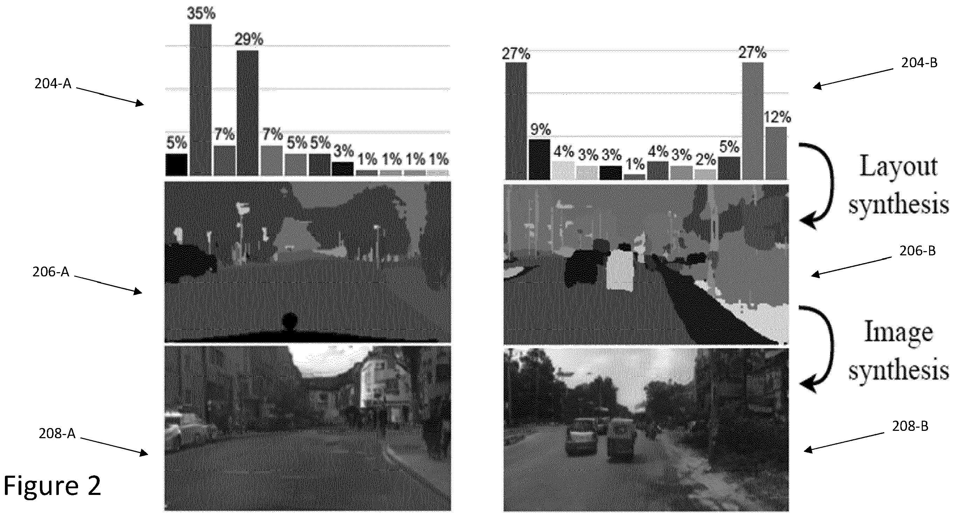

As indicated, the generative network 200 accepts as input, a random noise vector 202 and a conditioning code 204 specifying the target class distribution, i.e., the proportion of image surface that each class should occupy, in this case, for an urban scene, 50% of "sky," 30% of "road" and 20% of "pedestrian." Examples of such conditioning codes 204-A, 204-B with their respective semantic layouts 206-A, 206-B and subsequently generated real images 208-A, 208-B are shown in Figure 2.

In order to propagate conditioned information from previous scales onto the next, a residual conditional fusion block RC1-2, RC2-3, RC3-4, RC4-5 is provided between successive stages S1... S5 of the generative network 200. Here the candidate semantic layout *m* produced by a [TO MASK] for a stage is passed through a respective block C1-2, C2-3, C3-4, C4-5 comprising one or more convolutional layers, in this case, 1 × 1 convolutional layers with ReLU activation, so that the semantic layout *m* output by the [TO MASK] for a stage can be matched to the resolution of the input to the successive stage allowing the output of the convolutional layers C1-2, C2-3, C3-4, C4-5 to be aggregated with the respective input of the stage Π1, Π2, Π3, Π4 and then provided as input to the next stage.

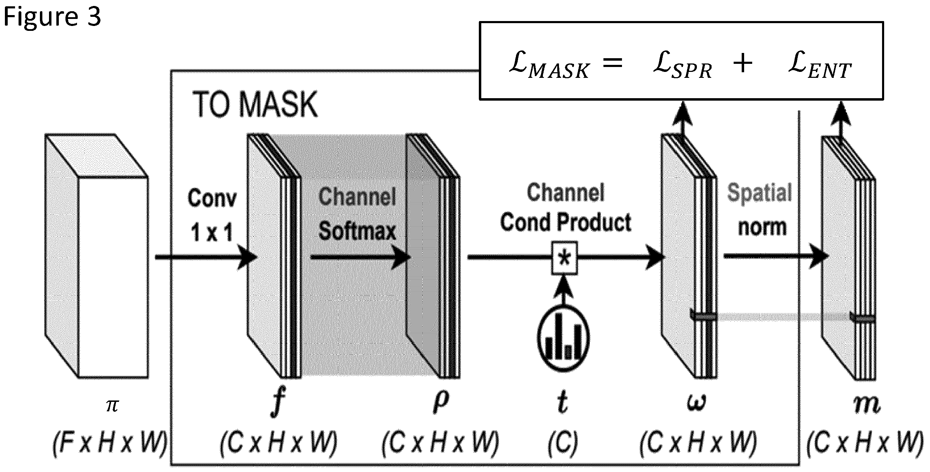

Referring to Figure 3, the [TO MASK] block converts a feature map Π into a candidate semantic layout *m* while respecting the prescribed class distribution through a *semantically-assisted activation* (SAA) module operating inside the [TO MASK] block.

In the embodiment, a 1 × 1 convolutional layer maps the feature map Π for a stage and having a number of channels (F) to a feature map *f* with number of channels equal to the number of semantic classes (C).

The remainder of the SAA module within the [TO MASK] block then acts in three steps upon the *C*-channel feature map $f \in R^{C \times H \times W}$ produced by the convolutional layer.

A spatial softmax activation function produces a feature map $\rho$, again with number of channels equal to the number of semantic classes (C). More formally, in the embodiment, the channel-wise spatial softmax is applied to *f* to obtain a density map $\rho$ in $[0,1]^{C \times H \times W}$ with:

$$\rho_{c,h,w} = \frac{exp(f_{c,h,w})}{\Sigma_{(h,w)} \ exp(f_{c,h,w})}$$

Thus, each slice $\rho_{c,:,:}$ of the density map is a normalized spatial map for class *c.* As is well known, the softmax regression is a form of logistic regression that normalizes an input value into a vector of values that follows a probability distribution whose total sums up to 1. Thus, after softmax, the total of the values in each channel is equal to 1 and each value for a location (h,w) within a channel is in the range [0,1].

It will be appreciated however, that this normalization does not have to result in total values for the channel being equal to 1 specifically or for the range of values for locations (h,w) within the channel to be in the range [0, 1]. Indeed, any number N can be used for the total and for the range of values.

The next step is to use the conditioning code *t* (204) to guide the output layout toward the target class distribution. To this end, the channels of the density map $\rho$ are weighted by their corresponding target proportions to define a new map $\omega_{c,h,w} = t_c \cdot \rho_{c,h,w}$. It will be appreciated that in this weighted density map, for each class $c, \Sigma_{(h,w)} \omega_{c,h,w} = t_c$. Thus, each class receives a "budget" amounting to its contribution to the palette comprising the semantic code. Also note that a class with the target proportion set to zero will not be represented in the final scene, as even minute channel values produced by the softmax function will be zeroed by the weighting function.

Finally, the candidate semantic layout *m* in $[0,1]^{C \times H \times W}$ is obtained by $L_1$ normalization of $\omega$, applied independently at every spatial location,

$$m_{c,h,w} = \frac{\omega_{c,h,w}}{\Sigma_{c \in [\![1,C]\!]} \ \omega_{c,h,w}},$$

which can be interpreted as defining at each pixel, a probability distribution over all classes.

Note that other forms of normalization than $L_1$ or $L_2$ could be used, as long as the normalized values for a location in a channel represent a proportion of the total probability of channel values at the location.

The [FROM MASK] block produces the final semantic map *M* at each pixel *h, w* by selecting the class channel with maximum score from the candidate semantic layout m as being the class for the pixel, with pixels for all other channels being zero. The final semantic layout $M$ can be provided as a set of C maps where at each location (h,w) only 1 map has a non-zero value (one-hot). Alternatively, a single map can be generated, where the discrete value at each location (h,w) indicates the class for the location. Note, there is no guarantee that final semantic layout $M$ will comply exactly with the target distribution, but it is tightly guided by it.

Two losses are attached to the SAA module at training time to ensure semantic layouts $M$ produced by the generative network 200 better follow the target semantic code:

(1) a conditional loss function $L_{MASK}$ to help generated layouts respecting the target semantic proportions; and
(2) an adversarial loss function $L_{ADV}$ to ensure realism.

In the present embodiment the two are decoupled, with the discriminator 300 focusing on realism by comparing the generated final semantic layout $M$, artificially generated using a semantic code for a real semantic layout, with the corresponding real semantic layout to produce $L_{ADV}$.

In the embodiment, the conditional loss function loss function $L_{MASK}$ has two parts:

$L_{ENT}$ which favors a peaky class distribution at each pixel (where the candidate semantic layouts m are close to one-hot), and
$L_{SPR}$ which favors an even spatial semantic coverage (uniform spread of activations in $\omega$ over pixels).

By way of explanation, consider the semantic layout as being painted with different colors in various quantities according to a semantic code comprising the palette for the layout. A sufficient condition to respect proportions from the palette in the final painting is to not mix colors too much in one spot (only dominant colors will be seen) while having all the paint from the palette evenly covering the layout (no accumulation or empty spot). The first part is translated into a loss that penalizes pixel-wise entropy of the candidate semantic layouts m generated from (z, t) pairs:

$$L_{ENT} = \frac{1}{HW} E_{(z,t)} \Big[ \sum_{(h,w) \in \Omega} e_{h,w} \Big],$$

where $e_{h,w} = - \Sigma_{c \in [1,C]} \, m_{c,h,w} ln(m_{c,h,w})$.

The second part is a spread loss on the weighted density map $\omega$. It encourages its activations to spread evenly across the image (hence to be close to $\frac{1}{HW}$ at each pixel since $\Sigma \, \omega_{c,h,w} = 1$):

$$L_{SPR} = \frac{1}{HW} E_{(z,t)} \Big[ \sum_{(h,w) \in \Omega} s_{h,w} \Big],$$

where $s_{h,w} = (1 - HW \Sigma_{c \in [1,C]} \, \omega_{c,h,w})^2$. Intuitively, $\omega$ defines a joint distribution over channels and pixel locations whose marginal over channels is defined by $t$. The spread loss encourages the marginal over pixel locations to become uniform. This way, pixels should contribute evenly to the output semantic proportions.

The proposed conditional loss finally reads $L_{MASK} = L_{ENT} + L_{SPR}$.

Taking advantage of the progressive structure of the generator 200, supervision via $L_{MASK}$ is possible at each stage S1 to S5. The simultaneous action of SAA and of the two losses $L_{MASK}$ and $L_{ADV}$ encourages the generated layouts to respect the target semantic code $t$ (204). Conditional to a semantic code $t$ (204), if $L_{SPR}$ is low, on average (over z), each spatial location receives an overall $\omega$ contribution close to $(HW)^{-1}$, hence $m \approx HW\omega$. We get: $E_z[\Sigma \, m_{c,h,w}|t] \approx HWE_z[\Sigma \, \omega_{c,h,w}|t] = HWt_c$ since $\Sigma \, \omega_{c,h,w} = t_c$ by construction. Hence, the proportions of the generated candidate semantic layouts $m$ are close to the target palette on average. If $L_{ENT}$ is low as well, the candidate semantic layouts maps $m$ will be, in addition, close to one-hot distributions at each pixel, and this average compliance with the target palette extends from the candidate semantic layouts $m$ to the final semantic layouts $M$.

Note again that the final semantic layouts $M$ are essentially hard masks (one-hot) while candidate semantic layouts $m$ are soft (even if $L_{ENT}$ promotes, to some extent, candidate layouts to be close to one-hot).

In relation to the discriminator 300, the improved WGAN loss disclosed in Gulrajani, Ishaan, Faruk Ahmed, Martin Arjovsky, Vincent Dumoulin, and Aaron C Courville, "Improved Training of Wasserstein GANs." In NeurIPS, 2017 can be used for the adversarial loss function $L_{ADV}$.

The generator network 200 of the present application can be trained separately to an image generator stage (not shown) which uses semantic layouts produced by the generator 200 to generate real images as described in, for example, ProGAN, Karras et al. 2018 and GauGAN, Park et al. 2019 referenced above. Both the generator 200 and the image generator can then be fine-tuned in an end-to-end fashion using, for example, the end-to-end setup from SB-GAN, Azadi et al. 2019 referenced above, where an additional discriminator is trained to tell apart real images from synthetic ones generated from synthetic layouts. By doing this, the generator network 200 benefits from additional supervision, while the image generator grows accustomed to being fed synthetic layouts which, in turn, improves the overall image quality.

In order to operate the present invention, there is a requirement to produce suitable semantic codes 204 to be fed to the trained network 200. In one implementation, a palette generator in the form of a Gaussian mixture model (GMM) is fitted to a set of true semantic layouts, from which the GMM can capture multiple meaningful modes. Vectors sampled from this GMM are then projected onto the probability $C$ - simplex, so as to amount to proper semantic codes. Because the exact projection is slow to compute, the sampled vectors can be clipped to $[0,1]^C$ followed by $L_1$ normalization.

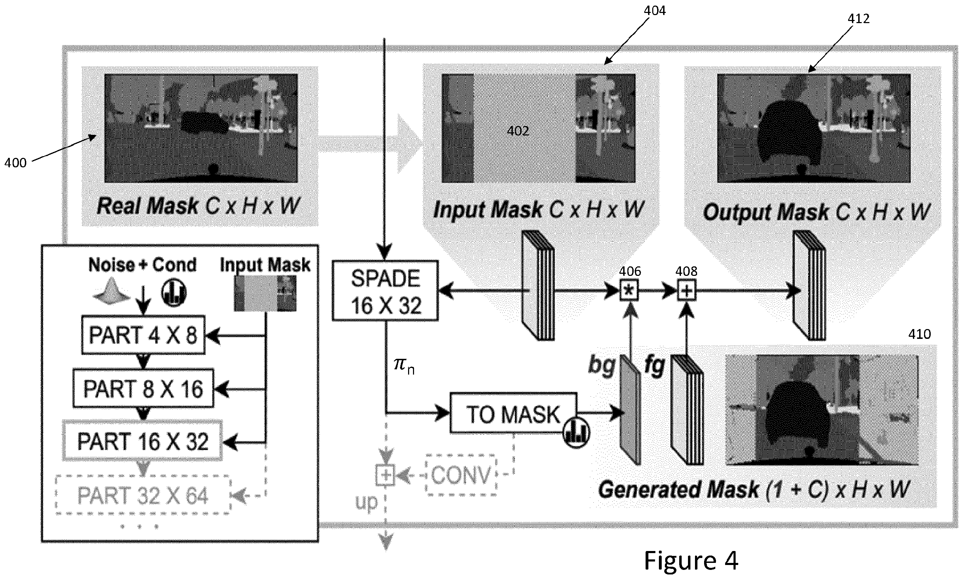

In the above-described embodiment, a semantic layout can be produced from only a noise vector 202 and a semantic code 204. Referring now to Figure 4, in a variation of the above-described embodiment, layout generation based on a semantic code can be extended to layout editing, with the aim of plausibly modifying a portion of a real layout mask 400 using a semantic code such as shown in Figure 2.

In this case, a portion 402 of the real input layout 400 is replaced with each pixel of the chosen portion 402 having its class probabilities initially set to $1/C$ for each class of the semantic code 204, while keeping the rest of the input layout as it is. The cropped input mask 404 is then passed to a modified generator network through residual blocks, such as the SPADE blocks described in Park et al. 2019, referred to above, which replace the upscaling blocks 4x8 and UP2 to UP5 of Figure 1. These SPADE blocks comprise a residual fusion block including two convolutional layers with conditional batchnorm and ReLU activation functions.

As before, the [TO MASK] block of the modified generator network takes the output of the SPADE block and synthesizes an edited version 410 of the input semantic layout 404 with the portion 402 filled following the given target proportions for the crop as determined by the semantic code 204. In this case, in addition to the C foreground (fg) classes, the generated semantic layout 410 produced by the [TO MASK] block has an additional *background* (bg) class whose proportions are also determined by the semantic code 204 so as to fill the part of the real input layout outside the portion 402.

The background class map is merged with the original input map through a convolution 406 so that the output candidate semantic layout 412 is computed as the sum 408 of the generated foreground mask (without background) and the input mask 404 weighted by the background (bg) probabilities.

In training this modified network, the conditional loss $L_{MASK}$ can be applied to the generated mask for the portion 402, while the adversarial loss $L_{ADV}$ is used on the output semantic layout as before.

Several variants of the above-described embodiments are possible to further improve their performance. First, to alleviate distribution gaps between synthetic and real data, AdvEnt disclosed in Vu, Tuan-Hung, Himalaya Jain, Maxime Bucher, Matthieu Cord, and Patrick Perez, "AdvEnt: Adversarial Entropy Minimization for Domain Adaptation in Semantic Segmentation" in CVPR 2019, a domain adaptation technique for semantic segmentation can be employed. This strategy is used to ensure synthetic and real supervisions are consistent. This domain adaptation (DA) technique boosts further the performance of our approach.

## Claims

1. A method for generating an augmented data set comprising artificially generated semantically segmented layouts and corresponding images comprising:

   a) defining a semantic code (204) comprising a vector of values, each corresponding to a respective proportion of a class in a semantically segmented layout; and
   within a generative network (200):
   b) combining a noise vector (202) and the semantic code (204) into a feature map ($\Pi_n$) with a first resolution HxW and a number of channels F;
   c) projecting the feature map ($\Pi_n$) into a feature map ($f$) comprising a respective channel for each class;
   d) applying a regression to each channel of the feature map ($f$) to produce normalized map ($p$) in which the sum of values in each channel is N and where each value for a location (h,w) within a channel is in the range [0,N];
   e) multiplying the values of each location of the normalized map ($p$) within a channel by a corresponding value for a class for the semantic code to produce a weighted feature map ($\omega$);
   f) normalizing channel values at each location of the weighted feature map ($\omega$) so that the value at each location in a channel represents a proportion of the total probability of channel values at the location to produce a candidate segmented layout ($m$);
   g) fusing said candidate segmented layout ($m$) with said feature map ($\Pi_n$) and upscaling said fused feature map to provide a higher resolution feature map ($\Pi_{n+1}$);
   h) repeating steps c) to f) at least once to produce a higher resolution candidate segmented layout ($m$);
   i) selecting a candidate segmented layout ($m$);
   j) at each location of said selected candidate segmented layout ($m$), selecting a class having the highest value for a location as the class for the location in a final segmented layout ($M$);
   k) using a generative adversarial network, generating an image based on said final segmented layout ($M$).

2. The method of claim 1 wherein N=1.

3. The method of claim 1 wherein said selected candidate segmented layout *(m)* is a highest resolution candidate segmented layout available.

4. The method of claim 1 wherein said regression is a softmax regression.

5. The method of claim 1 wherein said normalizing comprises either an $L_1$ or an $L_2$ normalizing.

6. The method of claim 1 wherein said upscaling doubles a resolution of said fused feature map.

7. The method of claim 1 wherein training each layer of the generative network (200) comprises:

   calculating a loss function ($L_{SPR}$) for said weighted feature map ($\omega$);
   calculating a loss function ($L_{ENT}$) for said candidate semantic layout *(m);* and
   within a discriminator network (300), calculating a loss function ($L_{ADV}$) for said final semantic layout *(M).*

8. The method of claim 7 wherein said loss function ($L_{SPR}$) for said weighted feature map ($\omega$) is defined as:

$$L_{SPR} = \frac{1}{HW} E_{(z,t)} \left[ \sum_{(h,w) \in \Omega} s_{h,w} \right],$$

   where:

   $s_{h,w} = (1 - HW\Sigma_{c \in [1,C]}\, \omega_{c,h,w})^2;$
   $z$ is said noise vector (202);
   $t$ is said semantic code (204); and
   $C$ is the total number of classes.

9. The method of claim 7 wherein said loss function ($L_{ENT}$) for said candidate semantic layout *(m)* is defined as:

$$L_{ENT} = \frac{1}{HW} E_{(z,t)} \left[ \sum_{(h,w) \in \Omega} e_{h,w} \right],$$

   where:

   $e_{h,w} = \Sigma_{c \in [1,C]}\, m_{c,h,w} ln(m_{c,h,w});$
   $z$ is said noise vector (202);
   $t$ is said semantic code (204); and
   $C$ is the total number of classes.

10. The method of claim 1 wherein said semantic layout is generated for a portion (402) of an existing semantic layout (400), the remainder of the existing semantic layout (404) being fused with said noise vector (202) and said semantic code (204) to provide said feature map ($\Pi_n$); and being fused with said candidate segmented layout *(m)* and said feature map ($\Pi_n$) to provide said higher resolution feature map ($\Pi_{n+1}$).

Figure 1

Figure 2

# Figure 3

$$\mathcal{L}_{MASK} = \mathcal{L}_{SPR} + \mathcal{L}_{ENT}$$

TO MASK

Conv
1 x 1

Channel
Softmax

Channel
Cond Product

*

Spatial
norm

$\pi$

$(F \times H \times W)$

$f$

$(C \times H \times W)$

$\rho$

$(C \times H \times W)$

$t$

$(C)$

$\omega$

$(C \times H \times W)$

$m$

$(C \times H \times W)$

EP 4 095 743 A1

Figure 4

Europäisches
Patentamt

European
Patent Office

Office européen
des brevets

# EUROPEAN SEARCH REPORT

Application Number

EP 21 17 6128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAMANEH AZADI ET AL: "Semantic Bottleneck Scene Generation", ARXIV.ORG, CORNELL UNIVERSITY LIBRARY, 201 OLIN LIBRARY CORNELL UNIVERSITY ITHACA, NY 14853, 26 November 2019 (2019-11-26), XP081539679, * Section 3; figures 1,2 * | 1-10 | INV. G06K9/00 G06K9/62 G06T7/00 |
| A | PARK TAESUNG ET AL: "Semantic Image Synthesis With Spatially-Adaptive Normalization", 2019 IEEE/CVF CONFERENCE ON COMPUTER VISION AND PATTERN RECOGNITION (CVPR), IEEE, 15 June 2019 (2019-06-15), pages 2332-2341, XP033686771, DOI: 10.1109/CVPR.2019.00244 [retrieved on 2020-01-08] * Section 2 * * Section 3; figures 1,2,3,4 * | 1-10 | |
| T | Moing Guillaume Le ET AL: "Semantic Palette: Guiding Scene Generation with Class Proportions", Arxiv, 3 June 2021 (2021-06-03), pages 1-17, XP055855826, Retrieved from the Internet: URL:https://arxiv.org/pdf/2106.01629.pdf [retrieved on 2021-10-28] * the whole document * | 1-10 | |

TECHNICAL FIELDS
SEARCHED (IPC)

G06K
G06T

The present search report has been drawn up for all claims

| Place of search | Date of completion of the search | Examiner |
|---|---|---|
| The Hague | 28 October 2021 | Boltz, Sylvain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARJOVSKY, MARTIN ; SOUMITH CHINTALA ; LEON BOTTOU.** Wasserstein GAN. *ICML,* 2017
- **GOODFELLOW ; IAN ; JEAN POUGET-ABADIE ; MEHDI MIRZA ; BING XU ; DAVID WARDE-FARLEY ; SHERJIL OZAIR ; AARON COURVILLE ; YOSHUA BENGIO.** Generative Adversarial Nets. *NeurIPS,* 2014
- **MAO ; XUDONG ; QING LI ; HAORAN XIE ; RAYMOND YK LAU ; ZHEN WANG ; STEPHEN PAUL SMOLLEY.** Least Squares Generative Adversarial Networks. *ICCV,* 2017
- **KARRAS ; TERO ; SAMULI LAINE ; TIMO AILA.** A Style-Based Generator Architecture for Generative Adversarial Networks. *CVPR,* 2019
- **KARRAS ; TERO ; SAMULI LAINE ; MIIKA AITTALA ; JANNE HELLSTEN ; JAAKKO LEHTINEN ; TIMO AILA.** Analyzing and Improving the Image Quality of styleGAN. *CVPR,* 2020
- **AZADI ; SAMANEH ; MICHAEL TSCHANNEN ; ERIC TZENG ; SYLVAIN GELLY ; TREVOR DARRELL ; MARIO LUCIC.** Semantic Bottleneck Scene Generation. *arXiv Preprint,* 2019
- **KARRAS ; TERO ; TIMO AILA ; SAMULI LAINE ; JAAKKO LEHTINEN.** Progressive Growing of GANs for Improved Quality, Stability, and Variation. *ICLR,* 2018
- **PARK ; TAESUNG ; MING-YU LIU ; TING-CHUN WANG ; JUN-YAN ZHU.** Semantic Image Synthesis with Spatially-Adaptive Normalization. *CVPR,* 2019
- **HOWE ; JONATHAN ; KYLE PULA ; AARON A REITE.** Conditional Generative Adversarial Networks for Data Augmentation and Adaptation in Remotely Sensed Imagery. *Applications of Machine Learning,* 2019
- **WANG ; TING-CHUN ; MING-YU LIU ; JUN-YAN ZHU ; ANDREW TAO ; JAN KAUTZ ; BRYAN CATANZARO.** High-Resolution Image Synthesis and Semantic Manipulation with Conditional GANs. *CVPR,* 2018

- **VOLOKITIN ; ANNA ; ENDER KONUKOGLU ; LUC VAN GOOL.** Decomposing Image Generation into Layout Prediction and Conditional Synthesis. *CVPRw,* 2020
- **RADFORD ; ALEC ; LUKE METZ ; SOUMITH CHINTALA.** Unsupervised Representation Learning with Deep Convolutional Generative Adversarial Networks. *ICLR,* 2016
- **ISOLA ; PHILLIP ; JUN-YAN ZHU ; TINGHUI ZHOU ; ALEXEI A EFROS.** Image-to-Image Translation with Conditional Adversarial Networks. *CVPR,* 2017
- **TANG ; HAO ; XIAOJUAN QI ; DAN XU ; PHILIP HS TORR ; NICU SEBE.** Edge Guided GANs with Semantic Preserving for Semantic Image Synthesis. *arXiv Preprint,* 2020
- **MIRZA ; MEHDI ; SIMON OSINDERO.** Conditional Generative Adversarial Nets. *arXiv Preprint,* 2014
- **ODENA ; AUGUSTUS ; CHRISTOPHER OLAH ; JONATHON SHLENS.** Conditional Image Synthesis with Auxiliary Classifier GANs. *ICML,* 2017
- **DE VRIES ; HARM ; FLORIAN STRUB ; JÉRÉMIE MARY ; HUGO LAROCHELLE ; OLIVIER PIETQUIN ; AARON C COURVILLE.** Modulating Early Visual Processing by Language. *NeurIPS,* 2017
- **DUMOULIN ; VINCENT ; JONATHON SHLENS ; MANJUNATH KUDLUR.** A Learned Representation for Artistic Style. *ICLR,* 2017
- **LIU ; XIHUI ; GUOJUN YIN ; JING SHAO ; XIAOGANG WANG ; HONGSHENG LI.** Learning to Predict Layout-to-Image Conditional Convolutions for Semantic Image Synthesis. *NeurIPS,* 2019
- **GULRAJANI ; ISHAAN ; FARUK AHMED ; MARTIN ARJOVSKY ; VINCENT DUMOULIN ; AARON C COURVILLE.** Improved Training of Wasserstein GANs. *NeurIPS,* 2017
- **VU ; TUAN-HUNG ; HIMALAYA JAIN ; MAXIME BUCHER ; MATTHIEU CORD ; PATRICK PEREZ.** AdvEnt: Adversarial Entropy Minimization for Domain Adaptation in Semantic Segmentation. *CVPR,* 2019